# EUROPEAN PATENT SPECIFICATION

(11) **EP 3 592 581 B1**
(45) Date of publication and mention of the grant of the patent: **17.11.2021**
(21) Application number: 17708801.0
(22) Date of filing: 06.03.2017
(51) Int. Cl.: B60D 1/48

(54) **A TOW BAR AND A METHOD FOR MANUFACTURING A TOW BAR**
ZUGSTANGE UND VERFAHREN ZUR HERSTELLUNG EINER ZUGSTANGE
BARRE DE REMORQUAGE ET PROCÉDÉ DE FABRICATION D'UNE BARRE DE REMORQUAGE

(43) Date of publication of application: 15.01.2020
(73) Proprietor: Brink Towing Systems B.V., 7951 CX Staphorst (NL)
(72) Inventor: KOETSIER, Robert, 8171 KT Vaassen (NL); LESKENS, Harmen, 8024 XM Zwolle (NL)
(74) Representative: Valea AB
(86) International application number: PCT/EP2017/055156
(87) International publication number: WO 2018/162026

(56) References cited:
- EP-A1- 2 607 111
- EP-A1- 2 803 507
- EP-A1- 3 150 409
- EP-A2- 2 871 081
- DE-U1- 7 808 690

## Description

### TECHNICAL FIELD

The present disclosure relates to a tow bar for a vehicle and a method for manufacturing a tow bar for a vehicle. The tow bar has an improved torsional stiffness enabling the tow bar to be stronger or manufactured using less material.

### BACKGROUND

Towing hook arrangements for towing e.g. trailers are commonly used today. In most of the cases a tow bar comprising a towing hook is mounted at the rear of a vehicle during the assembly process of the vehicle, although after sales mounting e.g. by an authorized garage is possible. For esthetical and practical reasons it may be desirable to have a towing hook which can be positioned between a towing position and a retracted position. Generally such towing hooks are referred to as retractable towing hooks.

The tow bar of a towing hook arrangement is generally extending in a transverse direction with respect to the vehicle and attached to the vehicle at two vehicle attachment sites on either side of the towing hook. A towing hook is subjected to substantial forces when towing. Just as a matter of example, a towing hook for a regular car may be adapted to a maximum towing weight of 2500 kg and a maximum vertical load of 100 kg. The vertical load, sometimes referred to as nose load, is a downwardly directed load due to gravity of the towable object e.g. a trailer, and the load positioned on e.g. the trailer such as rubble or stones. The tow bar is further subjected to dynamic loads, due to e.g. acceleration, braking, curbs, etc.

The vertical load, a horizontal load and/or the dynamic loads, impart the tow bar with torsion. The imparted torsion is dependent on the length of the towing hook which acts as a lever on the tow bar. To compensate for torsion tow bar manufacturers generally use thicker and stronger material. However, using thicker material generally tends to add weight to the tow bar. Vehicle manufacturers constantly strive towards reducing weight to reduce the fuel consumption of the vehicle. Tow bar manufacturers striving towards reducing the weight of the tow bars are thus constantly struggling with the dilemma of providing a strong and durable tow bar while at the same time provide a low weight tow bar. Heavy tow bars are also cumbersome from a manufacturing point as well as from a logistic point of view. Hence also tow bar manufacturers may benefit from striving towards lighter tow bars.

Patent document EP 2 607 111 A1 relates according to its abstract to a carrier system for a trailer coupling of a motor vehicle. The system has a cross beam represented as a pipe section. A connection system is provided in a middle longitudinal plane of a passenger car and at end regions with longitudinal beams. A coupling device is held in a position at structure sections and arranged in a rear part of the car. The cross beam is provided adjacent to the end regions with the longitudinal beams under an interposition of bending elements in receivers, where the bending elements are passed in the end positions by deformation processes and connected with the longitudinal beams. The longitudinal beams are made of high-strength flat material i.e. metal and a composite material. An independent claim is also included for a method for connecting longitudinal beams with a cross beam.

Patent document EP 2 803 507 A1 relates according to its abstract to a carrier arrangement for a trailer coupling or a load carrier, comprising a cross member and at least one holder arranged on the cross member for a trailer coupling or for a coupling part of a load carrier and, if appropriate, side carriers connected to the cross member for mounting on a rear of a vehicle body. It is provided in the carrier arrangement that at least two of the components of the carrier arrangement, or at least two of its construction components, are connected to the second of the components or the construction components by means of at least one bending tab arranged on a first of the components or the construction components, and that the at least one bending tab is connected to the second component or the second construction component by means of a material connection and / or by means of a connection comprising a screw or a rivet.

Patent document DE 78 08 690.5 U1 relates to a trailer coupling for motor vehicles, in particular for passenger cars, which has a carrier located crosswise to the vehicle longitudinal direction to be attached to the rear of the vehicle, for carrying the coupling ball. The carrier is formed of several shells made of sheet metal, preferably from two half shells, which) are provided with flanges and which are connected by these flanges by means of welding, in particular spot welding, to form a closed carrier.

### SUMMARY

It is thus an object of the present disclosure to provide a relatively light tow bar which still has an adequate torsional stiffness. This object is at least partly achieved by means of providing a tow bar according to claim 1. This object is at least partly achieved by means of a tow bar for a vehicle. The tow bar comprises a towing hook receiving portion adapted to detachably or fixedly connect a towing hook. A first and a second vehicle connection site are arranged on either side of the towing hook receiving portion and adapted to be connected to the vehicle. The tow bar has a tube section between the first and the second vehicle connection site. The tube section comprises a polygonal cross section having a plurality of corners. At least one reinforcing element is arranged inside of the tube section and arranged to fix the position of at least some of the plurality of corners of the polygonal cross section with respect to each other.

The reinforcing element provides improved torsional stiffness to the tow bar by supporting the interior of the tow bar and especially the relative position of the corners of the tow bar. The tube section of the tow bar will be less reluctant to yield to torsion imparted to the tow bar for example via a vertical load or dynamic load imparted to a towing hook, and as such can be manufactured with a thinner material. The reinforcing element is a distinct and separate component from the tow bar and attached to the tow bar in a suitable manner such as via welding. The present disclosure may further be used to increase the torsional stiffness of a tow bar if desirable.

The at least one reinforcing element may be arranged to fix the position of at least some of the corners by engaging from the inside of the tube section. Just as a matter of example, one or more reinforcing elements may be attached to the tube section of the tow bar on the outside of the tube section of the tow bar and/or on the inside of the tube section of the tow bar. As will be described in greater detail below, one or more reinforcing elements may be inserted via an aperture and attached in the aperture to the tube section. A connection in or at an aperture is considered to be an attachment from the inside, and not the outside of the tube section. Such inside connection prevents protruding elements from sticking out from the periphery of the tube section which may be advantageous when mounting the tow bar to a vehicle for example. A connection from the outside can for example be a mechanical connection of the reinforcing element such as bolt or screw and nut. Such connection may be advantageous as it may be a simple way to attach the reinforcing element.

The tube section of the tow bar may comprise at least one aperture and in that the at least one reinforcing element has been inserted through the aperture. Each reinforcing element, or a selected number of reinforcing elements, may be associated with a unique aperture, i.e. the reinforcing elements may have its own aperture through which it has been inserted. One or more reinforcing elements may also be inserted into one aperture. If the tube section comprises an open end, the one or more reinforcing elements may be inserted via the open end of the tube section. Such step may remove the need for forming a separate insertion aperture on the tube section of the tow bar. The advantage of forming one or more apertures enabling the insertion of one or more reinforcing elements has the advantage that the position of the reinforcing element may be accurately positioned. It is further easy to control that the reinforcing element has been attached to the tube section of the tow bar in an appropriate manner.

The tube section may comprise at least one aperture. The at least one reinforcing element may be attached to the tube section at the at least one aperture. The extension and surfaces of the aperture may be used to secure the position on the reinforcing element. Just as matter of example, the reinforcing element may be attached by welding to the tube section in the aperture. This does not only secure the reinforcing element to the tube section of the tow bar but may also strengthen the periphery wall of the tube section which may have been locally weakened due to the aperture.

The polygonal cross section may have different shapes. The tube section may comprise a rectangular or square cross section for example. Rectangular or square cross sections are easy to form apertures in, and which further are easy to seal again, e.g. via welding.

The at least one reinforcing element may be formed by different materials. One preferred material is metal and that the one or more reinforcing element is/are formed by one or more metal sheets. The metal sheet is preferably a steel sheet, aluminum sheet. Other materials may be used such as composite materials such as carbon fiber reinforced composite.

The tube section may comprise a plurality of apertures. A first aperture arranged to receive at least one reinforcing element and at least a second aperture for attaching the at least one reinforcing element to the tube section. In this way apertures may be formed to provide attachment points to the reinforcing element at a plurality of positions. This will assist in providing torsional stiffness to the tube section of the tow bar.

The tube section has a periphery wall and the at least one reinforcing element may be attached to the periphery wall of the tube section. Optionally or additionally; the reinforcing element is attached to at least one, preferably at least two, of the plurality of corners.

The reinforcing element may be attached to two opposing corners with respect to a longitudinal center axis of the tube section. This will provide an improved torsional stiffness to the tube section of the tow bar.

The reinforcing element may extend from the inside to the outside of the tube section such that the reinforcing element protrudes from the periphery of the tube section. In some embodiments the protruding part of the reinforcing element may be used to attach the reinforcing element. In other embodiments, the reinforcing element is arranged to not extend outside of the periphery of the tube section.

The at least one aperture may be an elongated slot. If the at least one aperture is an elongated slot, the elongated slot may have a main direction extending substantially perpendicular to a longitudinal center axis of the tube section. In other embodiments, the elongated slot may be provided with an angle which is less than 90 degrees, i.e. not perpendicular, with respect to the longitudinal center axis of the tube section.

The tube section may comprise at least two opposing apertures with respect to a longitudinal center axis of the tube section. The two opposing apertures may be used for insertion and/or attachment of the reinforcing element. Having two opposing pairs of apertures provides even more flexibility.

The tube section may comprise at least a first and a second reinforcing element. More reinforcing elements increase the torsional stiffness of the tube section. The torsional stiffness of the tube section of the tow bar may thus be controlled via the number of reinforcing elements used. The position of the reinforcing elements may also be used to govern the torsional stiffness of the tube section of the tow bar. The towing hook receiving portion may be arranged between the first and the second reinforcing element for example. Reinforcing elements may be arranged symmetrically on each side of the towing hook receiving portion, e.g. one or more, two or more, three or more, four or more, or five or more, on each side of the towing hook receiving portion.

Just as a matter of example, the at least one reinforcing element may be two or more, three or more, four or more, or five or more, reinforcing elements.

The reinforcing element may be attached to the tow bar using different methods e.g. by welding, screw(s), bolt(s), adhesive, or combinations thereof.

It is also an objective of the present disclosure to provide a method for manufacturing a tow bar. The method comprising the steps of providing a tow bar comprising a tube section formed by a periphery wall and having a polygonal cross section comprising a plurality of corners. Inserting a reinforcing element through an aperture in the tube section of the tow bar and securing the position of the at least one reinforcing element so that the at least one reinforcing element fix the position of the plurality of corners with respect to each other.

The reinforcing element provides improved torsional stiffness to the tow bar by supporting the interior of the tow bar and especially the relative position of the corners of the tow bar. The tube section of the tow bar will be more reluctant to yield to torsion imparted to the tow bar via a vertical load imparted to a towing hook for example, and as such can be manufactured with a thinner material. The reinforcing element is a distinct and separate component from the tow bar and attached to the tow bar in a suitable manner such as via welding. The method may also be used to increase the torsional stiffness of a tow bar if desirable.

The method may comprise attaching the reinforcing element to the tow bar by welding, screw(s), bolt(s), adhesive, or combinations thereof.

The method may comprise securing the reinforcing element via the aperture to the tow bar. Just as a matter of example, the reinforcing element may be secured by welding or adhering the reinforcing element to the tube section in the opening of the aperture, i.e. at the aperture.

The method may comprise forming one or more apertures in the periphery wall of the tube section of the tow bar. The tow bar can be provided with the apertures pre-made, or the apertures may be formed in the tow bar, i.e. the tube section of the tow bar, by e.g. milling or cutting.

### BRIEF DESCRIPTION OF THE DRAWINGS

Non-limiting embodiments of the present invention will be described in greater detail with reference to the accompanying figures in which;
figure 1 shows a portion of a vehicle having a towing hook arrangement in the form of a tow bar comprising a towing hook;
figure 2 shows an embodiment of a tow bar comprising a reinforcing element to improve the torsional stiffness of the reinforcing element;
figure 3 shows a cross section of the tow bar of figure 2 along the line A-A;
figure 4 shows a cut off portion of the tow bar of figure 2;
figures 5a-5b show a cut off portion of the tow bar of figure 2 in greater detail;
figures 6a-6b show a second embodiment of a reinforcing element;
figures 7a-7b show a third embodiment of a reinforcing element;
figures 8a-8g show different shapes of polygonal cross sections of the tube section of a tow bar and different shapes of reinforcing elements used and;
figure 9 shows a schematic process diagram of a method for manufacturing a tow bar.

### DETAILED DESCRIPTION OF PREFERRED EMBODIMENTS

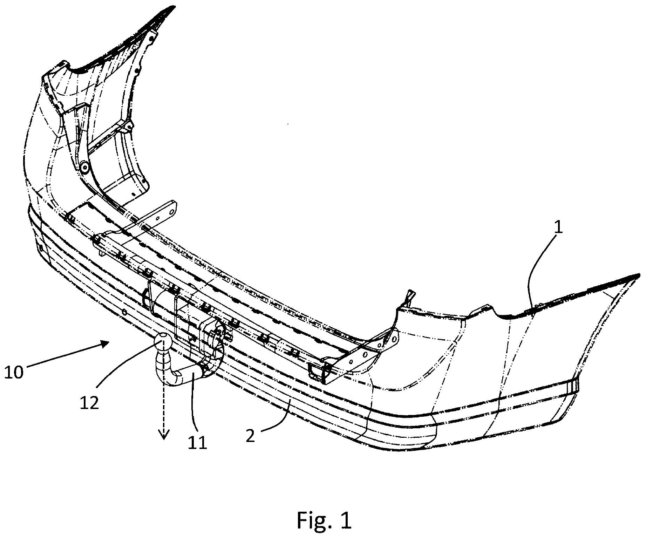

Figure 1 shows parts of a vehicle 1 and a towing hook arrangement 10 comprising a towing hook 11. The vehicle 1 is illustrated with parts of the rear of the vehicle 1 and specifically a bumper 2. For the sake of clarity, the rear of the vehicle has been illustrated with dashed lines and partly transparent. The towing hook 11, in the shown non-limiting embodiment, can be displaced between a towing position, shown in figure 1, and a retracted position (not shown). In the towing position, a towable object is configured to be attached to the towing hook 11 after which the vehicle 1 can tow or carry the towable object. In the retracted position, the towing hook 11 is positioned behind the bumper 2 of the vehicle 1 and is at least partly concealed from view by the bumper 2 of the vehicle 1.

The towing hook 11 is enabled to be displaced between the towing position and the retracted position by means of a ball and socket joint although other mechanisms may be used. It is also possible that the towing hook is fixed in the towing position, i.e. non-retractable. The towing hook 11 comprises a ball portion 12 adapted to be connected with the towable object. The size of the ball portion 12 can be selected to have different diameters but is in a preferred embodiment 50.8 mm (two inches) or 50 mm in diameter.

The towable object could be any towable object which is specifically adapted to be mounted on a towing hook or an equivalent element. Such towable objects can generally be divided into two sub categories. Firstly; pivotable towable objects such as a trailer, a caravan, a boat trailer, a cargo trailer, or similar. Pivotable towable objects rely on the towing hook to pull or push the pivotable towable object, while the pivotable towable object itself generally tend to have at least one ground supporting element such as wheels or skis or the like. The towing hook does not carry the full weight of a pivotable towable object. A pivotable towable object is further enabled to pivot about the towing hook and is thus relying on the mobility of the connection to the towing hook in order to be towed in a safe and convenient manner. Secondly; the towable object can be a carried accessory such as a bike carrier, a luggage carrier, a towing hook protection member or the like. Towing hook accessories are generally fixed to the towing hook and relying on that the towing hook, or the equivalent element, is carrying the full weight of the towing hook accessory. Although some load relief may sometimes be provided by the vehicle itself, a carried accessory does not have ground supporting elements such as wheels or skis or the like.

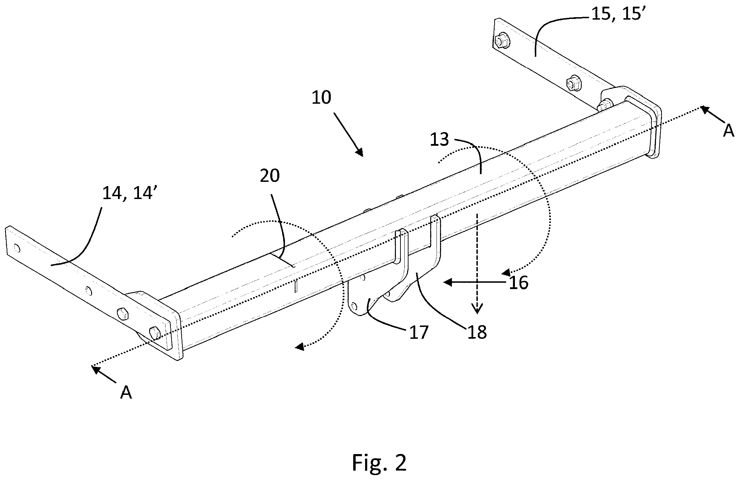

Independently of the towable object attached to the towing hook 11, the towing hook 11 will be subjected to a downwardly directed force component illustrated in figure 1 with a dashed arrow. Due to such downwardly directed torque, the towing hook arrangement 10 will be subjected to torsion as will be illustrated with reference to figure 2 in greater detail below.

**Figure 2** shows portions of a towing hook arrangement 10 in the form of a tow bar 13. The tow bar 13 comprises an attachment arrangement in the form of a first and a second vehicle connection site 14, 15, to attach the towing bar 13 to the vehicle 1 (not shown in figure 2). The first and the second vehicle connection sites 14, 15 are in the shown embodiment formed by a first and a second brackets 14', 15', in this case steel brackets.

Just as a matter of example, the first and a second vehicle connection site 14, 15 may be attached to the vehicle by welding and/or screws. The attachment arrangement of the tow bar 13 can be adapted to fit substantially any vehicle, in the shown embodiment; the first and the second vehicle connection sites 14, 15 are adapted to be mounted to the chassis of a car, such as a SUV. The tow bar 13 further comprises a towing hook receiving portion 16 adapted to be connected with a towing hook (not shown). The towing hook receiving portion 16 in in the shown embodiment formed by two opposing steel brackets 17, 18 but other configurations are possible. The towing hook receiving portion 16 is adapted to receive and connect a towing hook and possibly a towing hook retract mechanism and/or a motor.

As mentioned above, the downwardly directed force component imparted by a load on the towing hook (not shown) will impart torsion to the towing hook arrangement 10, and especially the tow bar 13. The imparted torsion is illustrated in figure 2 by the dashed arrows. In order to counter act such torsion, the tow bar 12 comprises at least one reinforcing element 20 configured to enhance the torsional stiffness of the tow bar 12. By having a separate element to enhance the torsional stiffness of the tow bar 12, the tow bar 12 can be made of a material having slightly less weight, e.g. having thinner walls. Optionally a more robust tow bar is provided.

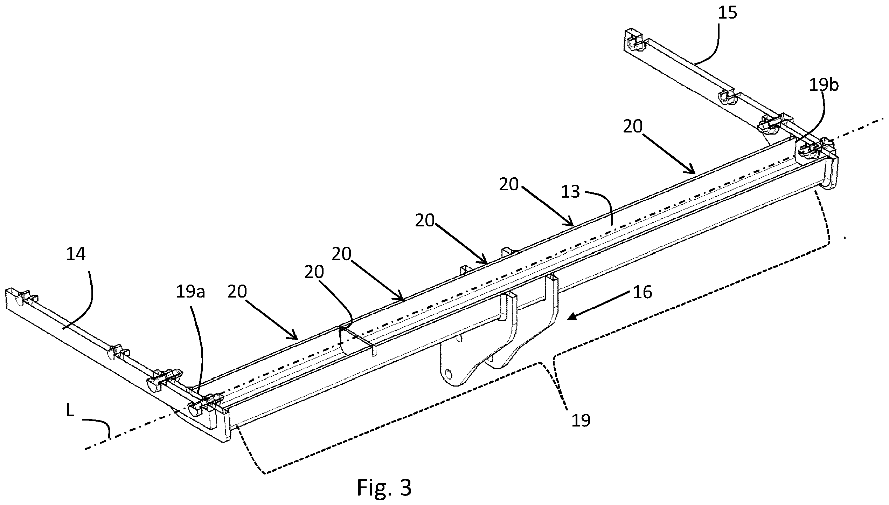

**Figure 3** shows a cross section of the tow bar 12 of figure 2 along the line A-A. The tow bar 12 comprises a tube section 19 having a longitudinal extension along a longitudinal center line L. In the shown embodiment the tube section 19 is a straight longitudinal tube section but it should be noted that the tube section does not necessarily need to be the straight tube section. A tube section of a tow bar in accordance with this disclosure can have one or more bends for example. The tube section 19 is arranged between the first and the second vehicle connection site 14, 15. The tube section 19 comprises a polygonal cross section. In the shown embodiment, the polygonal cross section is square shaped. Other polygonal cross sections are of course possible such as rectangular shaped, trigonal shaped, pentagonal, hexagonal, octagonal shaped or the like. The reinforcing element 20 is connected to the tube section such that the position of the corners of the tube section, i.e. the corners of the polygonal cross section are fixed with respect to each other. This will improve the torsional stiffness of the tube section.

Although it is said that the corners of the polygonal cross section are fixed with respect to each other, it does not exclude that the corners may be displaced ever so slightly with respect to each other due to the inherent elasticity of the material of the tube section and the reinforcing element. Nevertheless, from a structural point of view, the reinforcing element is configured such that the corners of the polygonal cross section are significantly more difficult to displace due to an imparted load on the towing hook than without the reinforcing element, hence the torsional stiffness of the tube section and thus the tow bar is improved.

The position of the reinforcing element may vary. The embodiment shown in figure 3 illustrates the reinforcing element being positioned inside the tube section 19 with no protruding portions. Just as a matter of example, figure 3 also illustrates by means of arrows optional or additional positions for one or more reinforcing elements. As can be gleaned from figure 3, it is advantageous to have a tow bar comprising a first and a second reinforcing element arranged on either side of the towing hook receiving portion 16. It should also be noted that one or more reinforcing elements may optionally or additionally be positioned at the towing hook receiving portion.

The tube section 19 of the tow bar 13 comprises a first and a second end 19a, 19b. In an embodiment, the tube section 19 comprises at least reinforcing elements arranged closer to the towing hook receiving portion 16 than to the first and the second end 19a, 19b of the tube section 19. As the first and the second vehicle connection sites 14, 15 impart some torsion stiffness to the tube section 19 of the tow bar 13, it can be efficient to provide one or more reinforcing element closer to the towing hook receiving portion 16 as the torque from applied load on the towing hook (not shown) will be most prominent at that point. Just as a matter of example, one or more reinforcing elements may be positioned a distance D from the towing hook receiving portion. The distance D is preferably equal to or less than 25 % of the total length of the tube section. The distance D is measured from the center of the towing hook receiving portion 16 and along the longitudinal center line L.

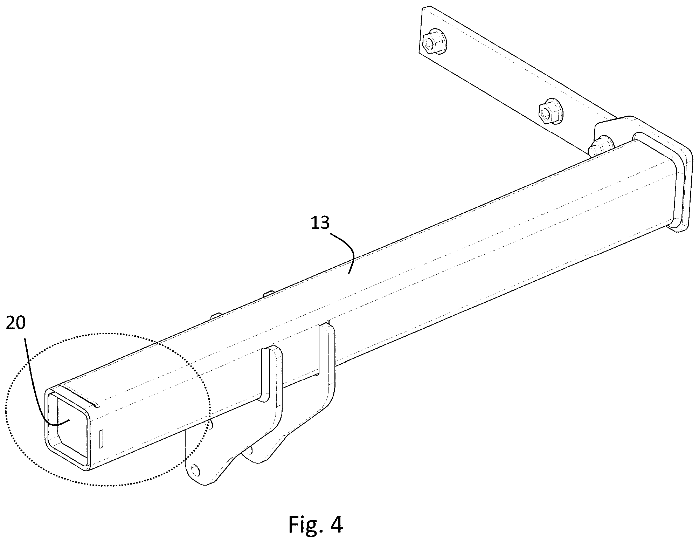

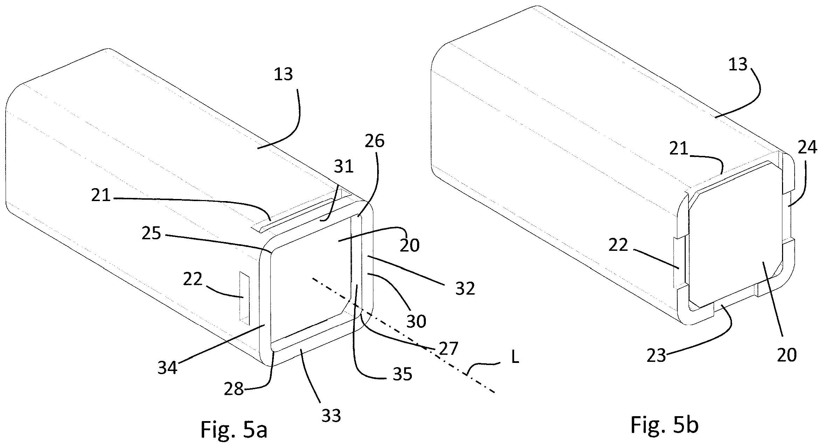

**Figure 4** shows a portion of the tube section 19 cut open to illustrate the reinforcing element 20. The cut open portion of the tube section 19, visualized by the dashed circle in figure 4, of the tube section 19 is shown in greater detail in figures 5a and 5b.

Figure 5a shows the cross section of the tube section 19 in a plane slightly offset with respect to the reinforcing element 20 and figure 5b shows a cross section of the tube section 19 adjacent to the reinforcing element 20. With reference to figures 5a-5b; the tube section 19 comprises at least one aperture 21, in the shown embodiment, the tube section comprises four apertures 21, 22, 23, 24. Figures 5a-5b also clearly illustrates the four corners 25, 26, 27, 28 of the tube section 19. As can be noted, the tube section 19 comprises a polygonal cross section having four corners 25, 26, 27, 28 forming substantially a squared shape. The reinforcing element 20 is positioned inside of the tube section 19 such that the form of the reinforcing element supports the tube section 19 from within. In the shown embodiment, the reinforcing element 20 engages the four corners 25, 26, 27, 28 and lies substantially adjacent to the inner surface of the tow bar 19. The four corners 25, 26, 27, 28 of the cross section are thus structurally supported so that they will be fixed with respect to each other, increasing the torsional stiffness of the tube section 19.

One of the apertures 21 of the tube section 19 is large enough to permit the insertion of the reinforcing element 20 into the tube section 19. The aperture 21 permitting insertion of the reinforcing element 20 is referred to as an insertion aperture 21.

In **figures 5a-5b****,** the tube section is formed by a periphery wall 30 formed by four side walls 31, 32, 33, 34 separated by the corners 25, 26, 27, 28. Each side wall 31, 32, 33, 34 having an inner surface 35. In the shown embodiment, the insertion aperture 21 extends between the inner surfaces 35 of two opposing side walls 32, 34. As mentioned above, the tube section 19 further comprises three more apertures 22, 23, 24. These apertures are referred to as attachment apertures. In the shown embodiment the tow bar 13 thus comprises one insertion aperture 21 and three attachment apertures 22, 23, 24. The purpose of the attachment apertures 22, 23, 24 is to improve the attachment of the reinforcing element 20 to the tow bar 13. Via the attachment apertures 22, 23, 24, the reinforcing element 20 can be attached to the tow bar 13 with e.g. welding or adhesive. It should be noted that the reinforcing element 20 can be attached to the tow bar 13 at the insertion apertures 21 as well. The insertion aperture 21 may thus serve two purposes; firstly permitting the insertion of the reinforcing element 20 and secondly; providing access to the reinforcing element 20 to fix the position of the reinforcing element 20 to the tow bar 13. The longitudinal center line L is also shown in figure 5a.

A tow bar 13 according to the present disclosure can be provided with one or more attachment apertures but do not need attachment apertures to fix the reinforcing element 20 to the tow bar 13. In some embodiments it may be enough that the reinforcing element is attached only at the insertion aperture. Some embodiments may be provided with one or more attachment apertures. The shape of the reinforcing element 20 may correspond, or substantially correspond, to the shape defined by the inner surface 35 of the periphery wall 30 of the tow bar 13 or the reinforcing element may have a shape which is different from the shape defined by the inner surface 35 of the periphery wall 30 of the tow bar 13. If more than one reinforcing element is used, combinations are of course possible.

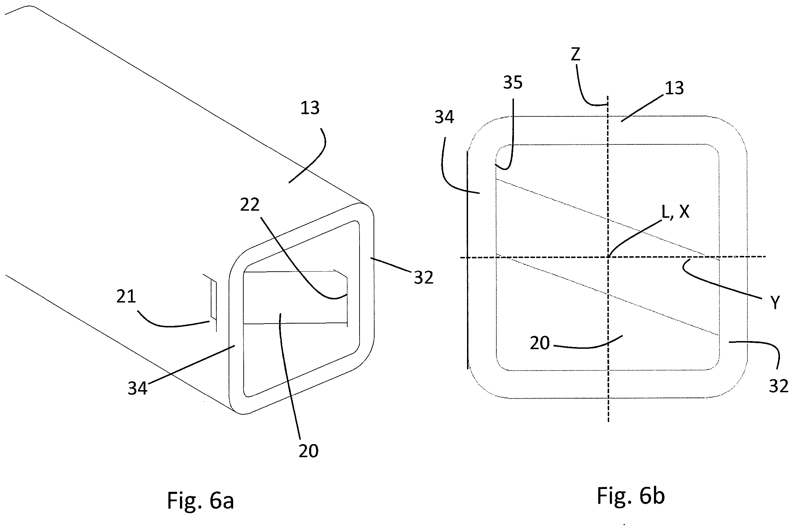

**Figures 6a-6b** show another embodiment of a reinforcing element 20. Figures 6a-6b show a portion of the tow bar 13 having a square shaped cross section as the tow bar 13 of figures 5a-5b. In the shown embodiment, the tow bar comprises two apertures, a first insertion aperture 21 and a second attachment aperture 22. The reinforcing element 20 is in the form of a flat bar extending between two opposing side walls 32, 34 in a substantially diagonal direction. As can be seen in figure 6b, the reinforcing element 20 is offset at the inner surface 35 of the side wall 32, 34 and with respect to a vertical and horizontal center axis Z, Y intersecting with the longitudinal center line L, X. The vertical and horizontal center axes are illustrated with dashed lines in figure 6b. The vertical and horizontal center axes, and the longitudinal center line L are perpendicular to each other. The reinforcing element 20 shown in the embodiment of figures 6a-6b, although not extending fully to the corners of the cross section, will provide improved torsion stiffness due to the offset with respect to the vertical and horizontal center axes Z, Y. The longitudinal center line L is also shown in figure 6a.

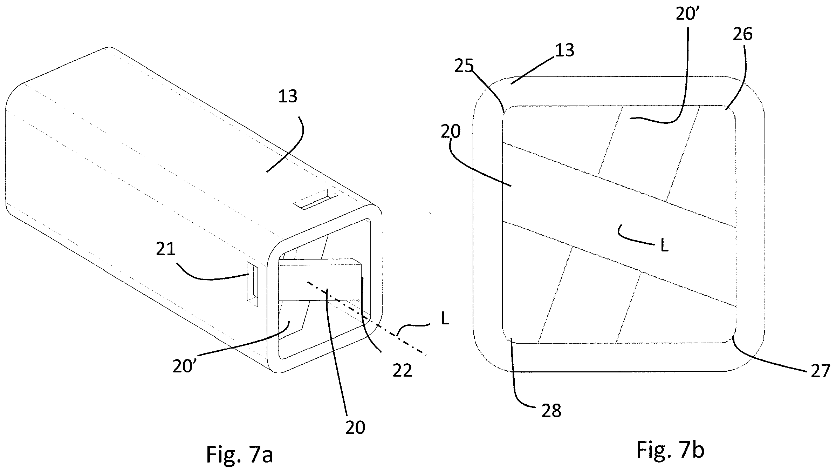

**Figures 7a-7b** show an embodiment similar to the embodiment of figures 6a-6b but having a first and a second reinforcing element 20, 20'. The first and the second reinforcing elements 20, 20' are arranged in an X-shaped configuration such that the position of the four corners 25, 26, 27, 28 are fixed from displacement with respect to each other.

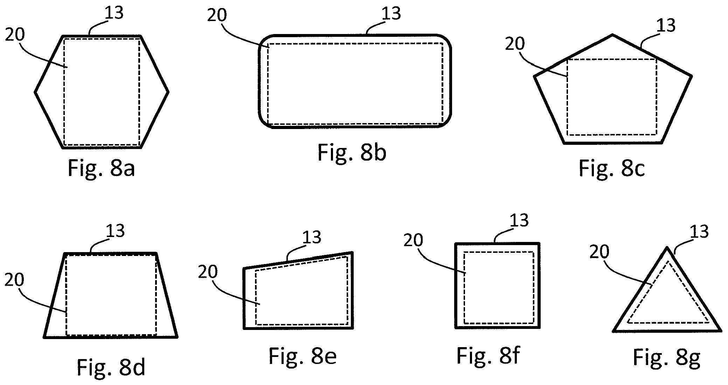

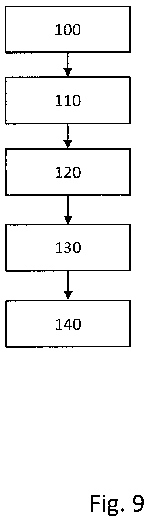

**Figures 8a-8g** illustrate different polygonal cross sections of a tow bar with a view along the longitudinal center line L. A reinforcing element 20 is further illustrated with dashed lines. As can be understood when viewing the different embodiments shown in figures 9a-9g, the reinforcing element may have different shapes while still fixing the corners of the cross section from displacement with respect to each other. Each reinforcing element 20 has been inserted into the tow bar 13 via an insertion aperture (not shown) in the periphery wall of the tow bar 13. The shape of the reinforcing element may correspond to the shape of the cross section of the tube section of the tow bar, or be different therefrom.

Just as a matter of example, the reinforcing element may be shaped such that it braces against the inner surface of the periphery wall of the tow bar.

When determining the shape of the cross section of a tow bar, the relevant cross section is the cross section perpendicular to the longitudinal center line L, as shown in figures 6b, 7b, and 8a-8g unless otherwise specified.

It is further an object of the present disclosure to provide a method for manufacturing a tow bar, and/or reinforcing a tow bar, using at least one reinforcing element. An embodiment of a method for manufacturing a tow bar will be disclosed with reference to the schematic process diagram shown in figure 9.

At step 100, a tow bar comprising a tube section formed by a periphery wall and having a polygonal cross section comprising a plurality of corners is provided.

At step 110, one or more apertures are formed in the periphery wall of the tube section. The one or more apertures can be milled out, or cut out with a saw or laser cutting device. It is also possible to melt open apertures in the periphery wall of the tow bar, e.g. by using a blowtorch. It should be noted that this step is optional as a tow bar having one or more pre made apertures may be provided in the previous step.

At step 120, a reinforcing element is inserted into the tow bar. Dependent on the position of the tow bar, the reinforcing element may be needed to be temporarily restrained to the tow bar e.g. by the insertion means. The reinforcing element may be inserted into the tow bar using a robot arm such as a Cartesian coordinate system operated robot arm.

At step 130, the one or more reinforcing elements are secured to the tow bar such that the at least one reinforcing element fix the position of the plurality of corners with respect to each other. The reinforcing element may be attached so that all corners of the cross section are fixed, or such that two or more of the corners are fixed. The reinforcing element may optionally be attached so that the shape of the reinforcing element provides the improved torsion stiffness. The reinforcing element may be shaped such that it braces against the inner surface of the periphery wall of the tow bar for example.

At step 140, the reinforcing element is attached to the tow bar e.g. by means of welding, screws, bolts and/or adhesive. A preferred step is to weld the one or more reinforcing elements to the tow bar, and preferably in the insertion aperture of the tow bar.

The one or more apertures may be formed simultaneously or sequentially. Further, the one or more reinforcing elements may be inserted directly after an insertion aperture has been formed, or after all the apertures have been formed in the tow bar. Each step above may thus be repeated a selected number of times before continuing to the next step.

## Claims

1. A tow bar for a vehicle (1), said tow bar (13) comprising a towing hook receiving portion (16) adapted to detachably or fixedly connect a towing hook (11), a first and a second vehicle connection site (14, 15) arranged on either side of said towing hook receiving portion (16) and adapted to be connected to said vehicle (1), said tow bar (13) having a tube section (19) between said first and said second vehicle connection site (14, 15), said tube section comprising a polygonal cross section having a plurality of corners (25, 26, 27, 28), at least one reinforcing element (20, 20') is arranged inside of said tube section (19) and arranged to fix the position of at least some of said plurality of corners (25, 26, 27, 28) of said polygonal cross section with respect to each other, wherein
said tube section (19) of said tow bar (13) comprises at least one aperture (21, 22, 23, 24) and wherein said at least one reinforcing element (20, 20') has been inserted through said aperture (21, 22, 23, 24), said at least one aperture (21, 22, 23, 24) not being an open end of said tube section (19), **characterized in that** said at least one reinforcing element (20, 20') is arranged closer to said towing hook receiving portion (16) than to a first and a second end (19a, 19b) of said tube section (19).

2. The tow bar (13) according to claim 1, wherein said at least one reinforcing element (20, 20') is arranged to fix the position of said corners by engaging from the inside and/or from the outside of said tube section (19).

3. The tow bar (13) according to any one of the preceding claims, wherein said at least one reinforcing element (20) is attached to said tube section (19) at said at least one aperture (21, 22, 23, 24).

4. The tow bar (13) according to any one of the preceding claims, wherein said tube section (19) comprises a rectangular or square cross section.

5. The tow bar (13) according to any one of the preceding claims, wherein said at least one reinforcing element (20, 20') is formed by a metal sheet such as steel sheet.

6. The tow bar (13) according to any one of the preceding claims, wherein said tube section (19) comprises a plurality of apertures, a first aperture (21) arranged to receive at least one reinforcing element (20, 20'), and at least a second aperture (22, 23, 24) for attaching said at least one reinforcing element (20, 20') to said tube section (19).

7. The tow bar (13) according to any one of the preceding claims, wherein said tube section (19) has a periphery wall (31, 32, 33, 34) and in that said at least one reinforcing element (20, 20') is attached to said periphery wall (31, 32, 33, 34) of said tube section (19).

8. The tow bar (13) according to any one of the preceding claims, wherein said reinforcing element (20, 20') is attached to at least one of said plurality of corners (25, 26, 27, 28).

9. The tow bar (13) according to any one of the preceding claims, wherein said reinforcing element (20, 20') is attached to two opposing corners (25; 27, 26; 28), with respect to a longitudinal center axis (L) of said tube section (19).

10. The tow bar (13) according to any one of the preceding claims, wherein said reinforcing element (20) extends from said inside to the outside of said tube section (19) such that said reinforcing element (20) protrudes from the periphery of said tube section (19).

11. The tow bar (13) according to any one of the preceding claims, wherein said at least one aperture (21, 22, 23, 24) is an elongated slot with a main direction extending substantially perpendicular to a longitudinal center axis (L) of said tube section (19).

12. The tow bar (13) according to any one of the preceding claims, wherein said tube section (19) comprises at least two opposing apertures (21; 23, 22; 24) with respect to a longitudinal center axis of said tube section (19).

13. The tow bar (13) according to any one of the preceding claims, wherein said tube section (19) comprises at least a first and a second reinforcing element (20, 20').

14. The tow bar (13) according to claim 13, wherein said towing hook receiving portion (16) is arranged between said first and said second reinforcing element (20, 20').

15. The tow bar (13) according to any one of the preceding claims, wherein said at least one reinforcing element (20, 20') is two or more reinforcing elements (20, 20').

16. The tow bar (13) according to any one of the preceding claims, wherein said at least one reinforcing element (20, 20') is attached to said tow bar (13) by welding, screw(s), bolt(s), adhesive, or combinations thereof.

17. A method for manufacturing a tow bar (13), said method comprising the steps of;
a) providing a tow bar (13) comprising a tube section (19) formed by a periphery wall (31, 32, 33, 34) and having a polygonal cross section comprising a plurality of corners (25, 26, 27, 28);
b) inserting a reinforcing element (20, 20') through an aperture (21, 22, 23, 24) in said tube section (19) of said tow bar (13), said at least one aperture (21, 22, 23, 24) not being an open end of said tube section (19), and;
c) securing the position of said at least one reinforcing element (20, 20') so that said at least one reinforcing element (20, 20') fix the position of at least some of said plurality of corners (25, 26, 27, 28) with respect to each other,
**characterized in that**
said at least one reinforcing element (20, 20') is arranged closer to said towing hook receiving portion (16) than to a first and a second end (19a, 19b) of said tube section (19).

18. The method according to claim 17, whereby said method comprises attaching said reinforcing element (20, 20') to said tow bar (13) by welding, screw(s), bolt(s), adhesive, or combinations thereof.

19. The method according to claim 17 or 18, whereby said method comprises securing said reinforcing element (20, 20') via said aperture (21, 22, 23, 24) to said tow bar (13).

20. The method according to any one of the claims 17-19, whereby said method comprises; forming one or more apertures (21, 22, 23, 24) in said periphery wall (31, 32, 33, 34) of said tube section (19) of said tow bar (13).

## Patentansprüche

1. Anhängerkupplung für ein Fahrzeug (1), wobei die Anhängerkupplung (13) einen Anhängehakenaufnahmeabschnitt (16), der geeignet ist, um einen Anhängehaken (11) lösbar oder fest zu verbinden, eine erste und eine zweite Fahrzeugverbindungsstelle (14, 15) umfasst, die auf beiden Seiten des Anhängehakenaufnahmeabschnitts (16) angeordnet und geeignet ist, um mit dem Fahrzeug (1) verbunden zu sein, wobei die Anhängerkupplung (13) einen Rohrbereich (19) zwischen der ersten und der zweiten Fahrzeugverbindungsstelle (14, 15) aufweist, wobei der Rohrbereich einen polygonalen Querschnitt umfasst, der mehrere Ecken (25, 26, 27, 28) aufweist, wobei wenigstens ein Verstärkungselement (20, 20') innerhalb des Rohrbereichs (19) angeordnet ist und angeordnet ist, um die Position von wenigstens einigen der mehreren Ecken (25, 26, 27, 28) des polygonalen Querschnitts hinsichtlich zueinander zu fixieren, wobei der Rohrbereich (19) der Anhängerkupplung (13) wenigstens eine Öffnung (21, 22, 23, 24) umfasst und wobei das wenigstens eine Verstärkungselement (20, 20') durch die Öffnung (21, 22, 23, 24) eingeführt wurde, wobei die wenigstens eine Öffnung (21, 22, 23, 24) kein offenes Ende des Rohrbereichs (19) ist, **dadurch gekennzeichnet, dass** das wenigstens eine Verstärkungselement (20, 20') näher an dem Anhängehakenaufnahmeabschnitt (16) als an einem ersten und einem zweiten Ende (19a, 19b) des Rohrbereichs (19) angeordnet ist.

2. Anhängerkupplung (13) nach Anspruch 1, wobei das wenigstens eine Verstärkungselement (20, 20') angeordnet ist, um die Position der Ecken durch Ineingriffnehmen von der Innenseite und/oder von der Außenseite des Rohrbereichs (19) zu fixieren.

3. Anhängerkupplung (13) nach einem der vorhergehenden Ansprüche, wobei das wenigstens eine Verstärkungselement (20) an dem Rohrbereich (19) an der wenigstens einen Öffnung (21, 22, 23, 24) befestigt ist.

4. Anhängerkupplung (13) nach einem der vorhergehenden Ansprüche, wobei der Rohrbereich (19) einen rechteckigen oder quadratischen Querschnitt umfasst.

5. Anhängerkupplung (13) nach einem der vorhergehenden Ansprüche, wobei das wenigstens eine Verstärkungselement (20, 20') durch ein Metallblech wie etwa Stahlblech ausgebildet ist.

6. Anhängerkupplung (13) nach einem der vorhergehenden Ansprüche, wobei der Rohrbereich (19) mehrere Öffnungen umfasst, eine erste Öffnung (21), die angeordnet ist, um wenigstens ein Verstärkungselement (20, 20') aufzunehmen, und wenigstens eine zweite Öffnung (22, 23, 24) zum Befestigen des wenigstens einen Verstärkungselements (20, 20') an dem Rohrbereich (19).

7. Anhängerkupplung (13) nach einem der vorhergehenden Ansprüche, wobei der Rohrbereich (19) eine Umfangswand (31, 32, 33, 34) aufweist und dass das wenigstens eine Verstärkungselement (20, 20') an der Umfangswand (31, 32, 33, 34) des Rohrbereichs (19) befestigt ist.

8. Anhängerkupplung (13) nach einem der vorhergehenden Ansprüche, wobei das Verstärkungselement (20, 20') an wenigstens einer der mehreren Ecken (25, 26, 27, 28) befestigt ist.

9. Anhängerkupplung (13) nach einem der vorhergehenden Ansprüche, wobei das Verstärkungselement (20, 20') an zwei gegenüberliegenden Ecken (25; 27, 26; 28) hinsichtlich einer Längsmittelachse (L) des Rohrbereichs (19) befestigt ist.

10. Anhängerkupplung (13) nach einem der vorhergehenden Ansprüche, wobei sich das Verstärkungselement (20) von der Innenseite zu der Außenseite des Rohrbereichs (19) derart erstreckt, dass das Verstärkungselement (20) von dem Umfang des Rohrbereichs (19) hervorsteht.

11. Anhängerkupplung (13) nach einem der vorhergehenden Ansprüche, wobei die wenigstens eine Öffnung (21, 22, 23, 24) ein länglicher Schlitz mit einer Hauptrichtung ist, die sich im Wesentlichen senkrecht zu einer Längsmittelachse (L) des Rohrbereichs (19) erstreckt.

12. Anhängerkupplung (13) nach einem der vorhergehenden Ansprüche, wobei der Rohrbereich (19) wenigstens zwei gegenüberliegende Öffnungen (21; 23, 22; 24) hinsichtlich einer Längsmittelachse des Rohrbereichs (19) aufweist.

13. Anhängerkupplung (13) nach einem der vorhergehenden Ansprüche, wobei der Rohrbereich (19) wenigstens ein erstes und ein zweites Verstärkungselement (20, 20') umfasst.

14. Anhängerkupplung (13) nach Anspruch 13, wobei der Anhängehakenaufnahmeabschnitt (16) zwischen dem ersten und dem zweiten Verstärkungselement (20, 20') angeordnet ist.

15. Anhängerkupplung (13) nach einem der vorhergehenden Ansprüche, wobei das wenigstens eine Verstärkungselement (20, 20') zwei oder mehr Verstärkungselemente (20, 20') sind.

16. Anhängerkupplung (13) nach einem der vorhergehenden Ansprüche, wobei das wenigstens eine Verstärkungselement (20, 20') an der Anhängerkupplung (13) durch Schweißen, Schraube(n), Bolzen, Klebstoff oder Kombinationen davon angebracht ist.

17. Verfahren zum Herstellen einer Anhängerkupplung (13), wobei das Verfahren die folgenden Schritte umfasst:
a) Bereitstellen einer Anhängerkupplung (13), die einen Rohrbereich (19) umfasst, der durch eine Umfangswand (31, 32, 33, 34) ausgebildet wird und einen polygonalen Querschnitt aufweist, der mehrere Ecken (25, 26, 27, 28) umfasst;
b) Einführen eines Verstärkungselements (20, 20') durch eine Öffnung (21, 22, 23, 24) in dem Rohrbereich (19) der Anhängerkupplung (13), wobei die wenigstens eine Öffnung (21, 22, 23, 24) kein offenes Ende des Rohrbereichs (19) ist, und;
c) Sichern der Position des wenigstens einen Verstärkungselements (20, 20'), so dass das wenigstens eine Verstärkungselement (20, 20') die Position von wenigstens einigen der mehreren Ecken (25, 26, 27, 28) hinsichtlich zueinander fixiert,
**dadurch gekennzeichnet, dass** das wenigstens eine Verstärkungselement (20, 20') näher an dem Anhängehakenaufnahmeabschnitt (16) als an einem ersten und einem zweiten Ende (19a, 19b) des Rohrbereichs (19) angeordnet ist.

18. Verfahren nach Anspruch 17, wodurch das Verfahren das Befestigen des Verstärkungselements (20, 20') an der Anhängerkupplung (13) durch Schweißen, Schraube(n), Bolzen, Klebstoff oder Kombinationen davon umfasst.

19. Verfahren nach Anspruch 17 oder 18, wodurch das Verfahren das Sichern des Verstärkungselements (20, 20') über die Öffnung (21, 22, 23, 24) an der Anhängerkupplung (13) umfasst.

20. Verfahren nach einem der Ansprüche 17-19, wodurch das Verfahren Folgendes umfasst:
Ausbilden einer oder mehrerer Öffnungen (21, 22, 23, 24) in der Umfangswand (31, 32, 33, 34) des Rohrbereichs (19) der Anhängerkupplung (13).

## Revendications

1. Barre de remorquage pour un véhicule (1), ladite barre de remorquage (13) comprenant une partie de réception de crochet de remorquage (16) conçue pour relier de manière amovible ou fixe un crochet de remorquage (11), un premier et un second site de liaison de véhicule (14, 15) agencés de chaque côté de ladite partie de réception de crochet de remorquage (16) et conçus pour être reliés audit véhicule (1), ladite barre de remorquage (13) ayant une section de tube (19) entre ledit premier et ledit second site de liaison de véhicule (14, 15), ladite section de tube comprenant une section transversale polygonale présentant une pluralité de coins (25, 26, 27, 28), au moins un élément de renforcement (20, 20') est agencé à l'intérieur de ladite section de tube (19) et agencé pour fixer la position d'au moins certains de ladite pluralité de coins (25, 26, 27, 28) de ladite section transversale polygonale les uns par rapport aux autres, dans laquelle ladite section de tube (19) de ladite barre de remorquage (13) comprend au moins une ouverture (21, 22, 23, 24) et dans laquelle ledit au moins un élément de renforcement (20, 20') a été inséré à travers ladite ouverture (21, 22, 23, 24), ladite au moins une ouverture (21, 22, 23, 24) n'étant pas une extrémité ouverte de ladite section de tube (19), **caractérisée en ce que** ledit au moins un élément de renforcement (20, 20') est agencé plus près de ladite partie de réception de crochet de remorquage (16) qu'à une première et une seconde extrémité (19a, 19b) de ladite section de tube (19).

2. Barre de remorquage (13) selon la revendication 1, dans laquelle ledit au moins un élément de renforcement (20, 20') est agencé pour fixer la position desdits coins en venant en prise depuis l'intérieur et/ou depuis l'extérieur de ladite section de tube (19).

3. Barre de remorquage (13) selon l'une quelconque des revendications précédentes, dans laquelle ledit au moins un élément de renforcement (20) est fixé à ladite section de tube (19) au niveau de ladite au moins une ouverture (21, 22, 23, 24).

4. Barre de remorquage (13) selon l'une quelconque des revendications précédentes, dans laquelle ladite section de tube (19) comprend une section transversale rectangulaire ou carrée.

5. Barre de remorquage (13) selon l'une quelconque des revendications précédentes, dans laquelle ledit au moins un élément de renforcement (20, 20') est formé par une tôle métallique telle qu'une tôle d'acier.

6. Barre de remorquage (13) selon l'une quelconque des revendications précédentes, dans laquelle ladite section de tube (19) comprend une pluralité d'ouvertures, une première ouverture (21) agencée pour recevoir au moins un élément de renforcement (20, 20'), et au moins une seconde ouverture (22, 23, 24) pour fixer ledit au moins un élément de renforcement (20, 20') à ladite section de tube (19).

7. Barre de remorquage (13) selon l'une quelconque des revendications précédentes, dans laquelle ladite section de tube (19) présente une paroi périphérique (31, 32, 33, 34) et en ce que ledit au moins un élément de renforcement (20, 20') est fixé à ladite paroi périphérique (31, 32, 33, 34) de ladite section de tube (19).

8. Barre de remorquage (13) selon l'une quelconque des revendications précédentes, dans laquelle ledit élément de renforcement (20, 20') est fixé à au moins l'un de ladite pluralité de coins (25, 26, 27, 28).

9. Barre de remorquage (13) selon l'une quelconque des revendications précédentes, dans laquelle ledit élément de renforcement (20, 20') est fixé à deux coins opposés (25 ; 27, 26 ; 28), par rapport à un axe central longitudinal (L) de ladite section de tube (19).

10. Barre de remorquage (13) selon l'une quelconque des revendications précédentes, dans laquelle ledit élément de renforcement (20) s'étend dudit intérieur vers l'extérieur de ladite section de tube (19) de telle sorte que ledit élément de renforcement (20) dépasse de la périphérie de ladite section de tube (19).

11. Barre de remorquage (13) selon l'une quelconque des revendications précédentes, dans laquelle ladite au moins une ouverture (21, 22, 23, 24) est une fente allongée avec une direction principale s'étendant sensiblement perpendiculairement à un axe central longitudinal (L) de ladite section de tube (19).

12. Barre de remorquage (13) selon l'une quelconque des revendications précédentes, dans laquelle ladite section de tube (19) comprend au moins deux ouvertures opposées (21 ; 23, 22 ; 24) par rapport à un axe central longitudinal de ladite section de tube (19).

13. Barre de remorquage (13) selon l'une quelconque des revendications précédentes, dans laquelle ladite section de tube (19) comprend au moins un premier et un second élément de renforcement (20, 20').

14. Barre de remorquage (13) selon la revendication 13, dans laquelle ladite partie de réception de crochet de remorquage (16) est agencée entre ledit premier et ledit second élément de renforcement (20, 20').

15. Barre de remorquage (13) selon l'une quelconque des revendications précédentes, dans laquelle ledit au moins un élément de renforcement (20, 20') est constitué de deux ou plusieurs éléments de renforcement (20, 20').

16. Barre de remorquage (13) selon l'une quelconque des revendications précédentes, dans laquelle ledit au moins un élément de renforcement (20, 20') est fixé à ladite barre de remorquage (13) par soudage, vis(s), boulon(s), adhésif, ou des combinaisons de ceux-ci.

17. Procédé de fabrication d'une barre de remorquage (13), ledit procédé comprenant les étapes consistant à :
a) fournir une barre de remorquage (13) comprenant une section de tube (19) formée par une paroi périphérique (31, 32, 33, 34) et présentant une section transversale polygonale comprenant une pluralité de coins (25, 26, 27, 28) ;
b) insérer un élément de renforcement (20, 20') à travers une ouverture (21, 22, 23, 24) dans ladite section de tube (19) de ladite barre de remorquage (13), ladite au moins une ouverture (21, 22, 23, 24) n'étant pas une extrémité ouverte de ladite section de tube (19), et ;
c) fixer la position dudit au moins un élément de renforcement (20, 20') de sorte que ledit au moins un élément de renforcement (20, 20') fixe la position d'au moins certains de ladite pluralité de coins (25, 26, 27, 28) les uns par rapport aux autres,
**caractérisé en ce que** ledit au moins un élément de renforcement (20, 20') est agencé plus près de ladite partie de réception de crochet de remorquage (16) que d'une première et d'une seconde extrémité (19a, 19b) de ladite section de tube (19).

18. Procédé selon la revendication 17, dans lequel ledit procédé comprend la fixation dudit élément de renforcement (20, 20') à ladite barre de remorquage (13) par soudage, vis(s), boulon(s), adhésif ou des combinaisons de ceux-ci.

19. Procédé selon la revendication 17 ou 18, dans lequel ledit procédé comprend la fixation dudit élément de renforcement (20, 20') par l'intermédiaire de ladite ouverture (21, 22, 23, 24) à ladite barre de remorquage (13).

20. Procédé selon l'une quelconque des revendications 17 à 19, dans lequel ledit procédé comprend :
la formation d'une ou plusieurs ouvertures (21, 22, 23, 24) dans ladite paroi périphérique (31, 32, 33, 34) de ladite section de tube (19) de ladite barre de remorquage (13).
